# EUROPEAN PATENT APPLICATION

(11) **EP 1 113 424 A1**
(43) Date of publication of application: **04.07.2001**
(21) Application number: 99125658.7
(22) Date of filing: 22.12.1999
(51) Int. Cl.: G11B 5/11, G11B 5/105

(54) **Magnetic recording device**

(71) Applicant: Mitsumi Electric Co., Ltd., Chofu-shi, Tokyo (JP)
(72) Inventor: Osaka, Tomohiko, c/o Yamagata Mitsumi Co., Ltd., Yamagata-shi, Yamagata (JP); Sakurai, Yoshikazu, c/o Yamagata Mitsumi Co., Ltd., Yamagata-shi, Yamagata (JP)
(74) Representative: Grünecker, Kinkeldey, Stockmair & Schwanhäusser Anwaltssozietät

(57) **Abstract**

A recording head assembly includes a slider a surface to be slid on a surface of the recording disk, a head core member (22,24) one end portion of which forms a recording surface together with the slide surface of the slider, and a drive coil member (23) provided on the other end portion of the head core member. A gimbal (12) supports the recording head assembly in a center portion thereof. A carriage (11) supports a peripheral portion of the gimbal. A shield ring (30) surrounding the drive coil member for shielding the same magnetically is supported by the carriage in order to reduce the weight of the recording head assembly.

## Description

### BACKGROUND OF THE INVENTION

The present invention relates to a magnetic recording device for a magnetic disk wherein structure in which a shield ring for magnetically shielding the periphery of a drive coil is supported is improved and the weight of a head is reduced.

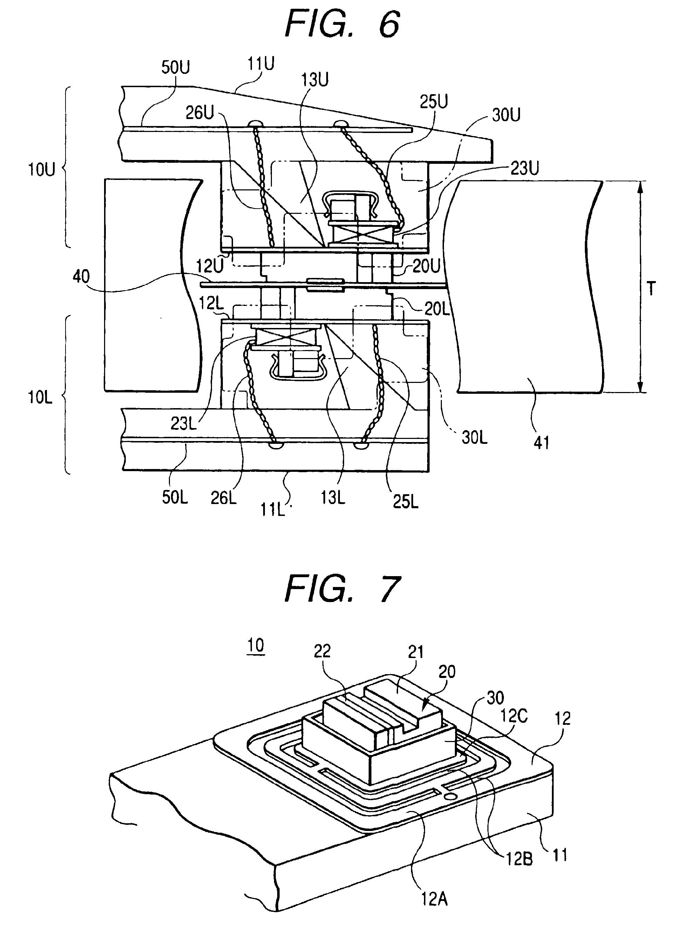

Fig. 7 is a partial perspective view showing an example of a magnetic head 10 used in a general floppy disk drive (FDD). The magnetic head 10 is a part of a carriage 11 which is a carrier and supports the periphery 12A of a gimbal 12. The center 12C which and the periphery 12A of the gimbal 12 are partially separated by a groove 12B is elastically coupled to the periphery 12A. A magnetic head assembly 20 is elastically supported by the center 12C of the gimbal 12.

The magnetic head assembly 20 is composed of a slider 21 having a surface slid on a floppy disk (FD), a head core 22 fixed to the slider 21 and a drive coil 23 (not shown) into which the leg of the head core 22 is inserted. In the drive coil 23, a coil for recording and reproducing and a coil for erasing are included. The periphery of the assembly 20 is magnetically shielded by a shield ring 30 formed in the shape of a ring or a box using a magnetic substance so that external magnetic noise has no effect upon the drive coil.

The purpose of supporting the magnetic head assembly 20 by the gimbal 12 is to make the flat sliding surface of the slider 21 to follow the recorded face of FD because the recorded face of FD is not completely flat but has waviness, The lighter a head supported by the gimbal 12 is, the satisfactory the follow-up performance becomes. In the structure of the related magnetic head 10 shown in Fig. 7, the shield ring 30 is bonded to the center 12C of the gimbal 12 and mounted together with the magnetic head assembly 20, Therefore, the weight of the head becomes heavier by the quantity of the shield ring 30 and the touch of the head to the runout of FD and others is deteriorated. As a result, a problem that the variation of output becomes large and a servo characteristic is deteriorated occurs.

### SUMMARY OF THE INVENTION

The present invention is made to solve the above problem. It is therefore an object of the present invention is to provide a magnetic recording device wherein the weight of a head supported by a gimbal is reduced by supporting a shield ring by a carriage and the follow-up performance of a magnetic head for a magnetic disk is improved.

In order to achieve the above object, there is provided magnetic recording head used for a magnetic disk, comprising:
a recording head assembly including:
   a slider member having a surface to be slid on a surface of the recording disk;
   a head core member secured to the slider member such that one end portion of which forms a recording surface together with the slide surface of the slider; and
   a drive coil member provided on the other end portion of the head core member;
a gimbal for supporting the recording head assembly in a center portion thereof;
a carriage for supporting a peripheral portion of the gimbal; and
a shield ring supported by the carriage, the shield ring surrounding the drive coil member for shielding the same magnetically.

There may be configured that: the head core member includes a first head core used for a low density recording and a second head core used for a high density recording; the drive coil member includes a first drive coil provided on an end portion of the first head core and a second drive coil provided on an end portion of the second head core; and the shield ring is provided so as to surround the first drive coil.

There may be confitured that: the carriage includes a flat portion on which the shield ring is fixed and a pair of wall portions vertically extending from the flat portion; and the gimbal is supported by an upper end portion of the respective wall portions.

There may be confitured that: the shield ring is fixed on the flat portion so as to cover the wall portions.

There may be configured that: the shield ring includes projection pieces extended from an upper end of thereof along the wall portions of the carriage such that an upper end of respective the projection pieces situates upper than the gimbal; and the respective projection pieces are arranged in the vicinity of the drive coil member.

There may be configured that: the carriage includes a flat portion on which the shield ring is fixed; and the gimbal is supported by an upper end portion of the shield ring.

There may be configured that: the shield rind ring includes mounting pieces horizontally extended from the upper end portion of the shield ring, on which the gimbal is mounted.

According to the present invention, there is also provided a magnetic recording device used for a magnetic disk, wherein the above recording heads are provided on each side of the magnetic disk.

### BRIEF DESCRIPTION OF THE DRAWINGS

In the accompanying drawings:
Fig. 1 is a perspective view showing a first embodiment of a magnetic recording device according to the present invention;
Fig. 2 is a perspective view showing a second embodiment of the magnetic recording device according to the present invention;
Fig. 3 is a perspective view showing a third embodiment of the magnetic recording device according to the present invention;
Fig. 4 is a perspective view showing a fourth embodiment of the magnetic recording device according to the present invention;
Fig. 5 is a perspective view showing a fifth embodiment of the magnetic recording device according to the present invention;
Fig. 6 is a side view showing a sixth embodiment of the magnetic recording device according to the present invention; and
Fig. 7 is a perspective view showing a related magnetic head.

### DETAILED DESCRIPTION OF THE PREFERRED EMBODIMENTS

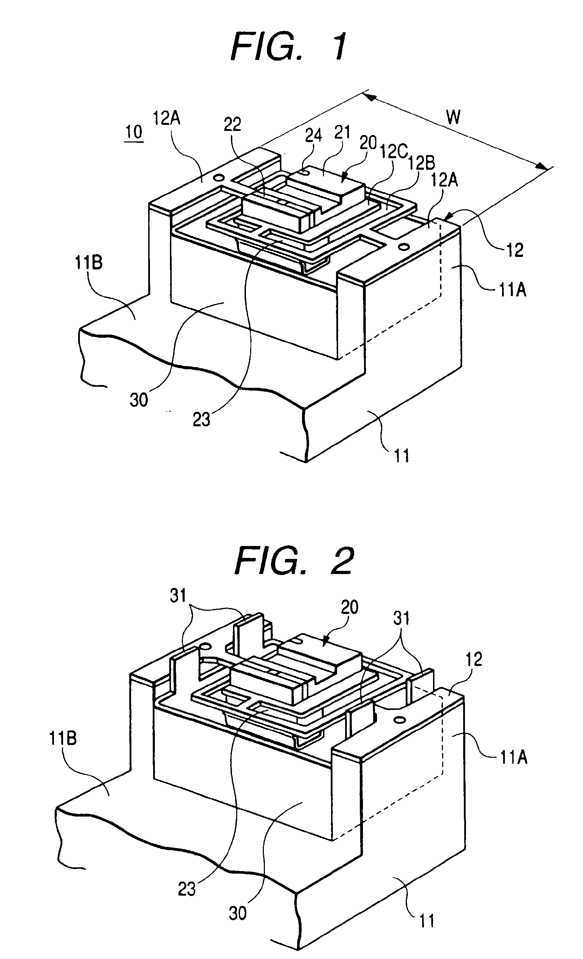

Referring to preferred embodiments shown In the drawings, the present invention will be described in detail below. Fig. 1 is a perspective view showing a first embodiment of a magnetic recording device according to the present invention. FDD corresponding to a low-density record type of FD of 1 to 2 MB was a mainstream for a long time, however, recently a function to enable also correspondence to a high-density record type of FD of 100 MB is required. Low density FD the coercive force of which is 600 to 700 Oe (oersted) and high density FD the coercive force of which is 1500 Oe or more. are different in the type of a used magnetic head. To mount a head for low density and a head for high density in one FDD, a method of fixing both to one slider is adopted.

As shown in Fig, 1, a reference number 22 denotes a head core for low density recording, 23 denotes its drive coil and 24 denotes a head core for high density recording. The drive coil (not shown) wound on the head core for high density recording 24 is embedded in a concave portion formed in a slider 21. The material of the slider 21 is generally ceramic. A gap for recording/reproducing and a gap for erasing are formed on each surface of the head cores 22 and 24. In general structure, the drive coil 23 is mounted on the upper surface of a gimbal 12 together with the slider 21, however, in this embodiment, structure in which the drive coil 23 is mounted on the lower surface of the gimbal 12 is shown.

In the magnetic head 10 shown In Fig. 1, a magnetic head assembly 20 is supported by the center 12C of the gimbal 12. The periphery 12A of the gimbal 12 is fixed to the top of a pair of wall portion 11A stood from the side of the carriage 11. In the meantime, a shield ring 30 for magnetically shielding the periphery of the drive coil 23 of the magnetic head assembly 20 is fixed to a flat part 11B of the carriage 11 in a state in which the shield ring is structurally separated from the magnetic head assembly 20 and the gimbal 12. Therefore, according to the present invention, the weight of the head which the gimbal 12 supports is reduced without reducing the effect of shielding by the shield ring 30.

For an example of actual dimensions, the width W of the magnetic head 10 is set so that it is smaller than the width (9 mm) of a head opening of a jacket for housing FD. For an example, W is set to 8 mm or less. For the material of the shield ring 30, a permalloy copper plate, an aluminum plate, a ferrite plate and others respectively approximately 0.2 mm thick are used. In each example described later, the similar plates are also used.

According to the magnetic head 10 provided with the structure shown in Fig. 1, the following advantages are acquired. As the side of the drive coil 23 is surrounded by the shield ring 30, resistance to noise is improved. As the weight of the shield ring 30 has no effect upon the weight of the head which the gimbal 12 supports, the follow-up performance of the head for the runout and others of FD is improved and a servo characteristic is improved by stable output. As positioning required for attaching the shield ring 30 can be performed by a part, a dedicated fixture is not required and workability is improved.

Fig. 2 Is a perspective view showing a second embodiment of the magnetic recording device according to the present invention. A magnetic head 10 in this embodiment is based upon the conflguration shown in Fig. 1. A shield ring 30 In this embodiment is provided with plural projections 31 protruded along the wall portion 11A of a carriage 11. Since the projection 31 is located dose to the side of the slid surface (gap) of a head core for low density recording 22 of a magnetic head assembly 20, resistance to noise is improved and thereby the effect of shielding from the side of a drive coil 23 can be enhanced.

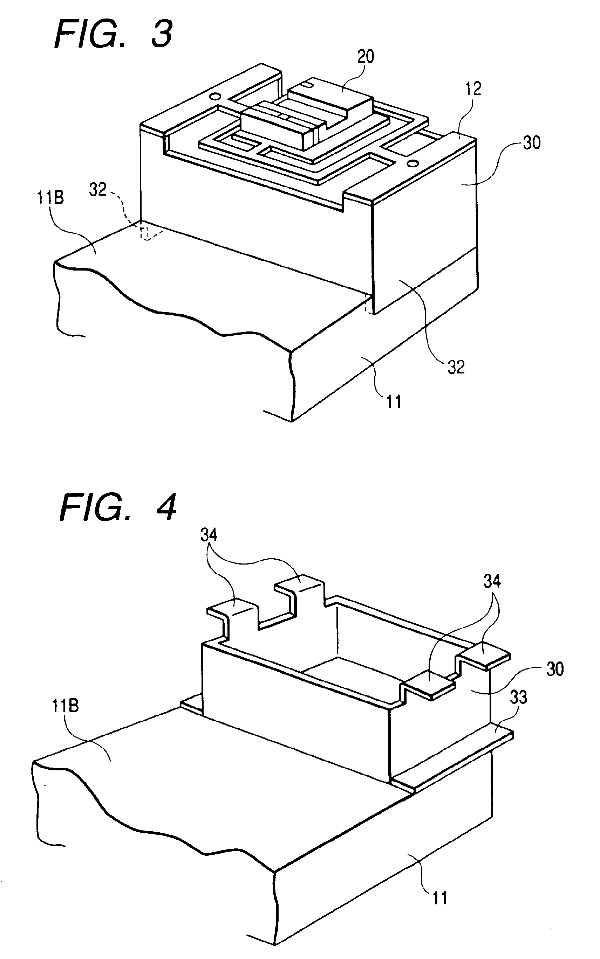

Fig. 3 is a perspective view showing a third embodiment of the magnetic recording device according to the present invention. A shield ring 30 in this embodiment is mounted on a flat part 11B of a carriage 11 and a gimbal 12 is mounted on the top of the shield ring 30. That is, the shield ring 30 functions as the wall portion 11A of the carriage 11 shown in Figs. 1 and 2. In the lower part of the shield ring 30, a projection 32 for positioning fitted to the carriage 11 is formed.

Fig. 4 is a perspective view showing a fourth embodiment of the magnetic recording device according to the present invention. A shield ring 30 in this embodiment is provided with a bent part 33 mounted on a flat part 11B of a carriage 11 in the lower part and is also provided with a bent part 34 for mounting a gimbal 12 in the upper part. In this embodiment, the shield ring 30 is also mounted on the carriage 11 and the gimbal 12 is also mounted on the shield ring 30.

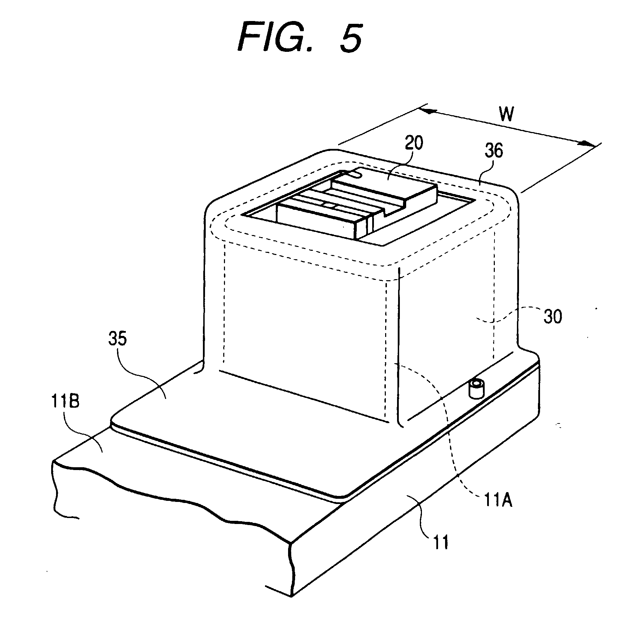

Fig. 5 is a perspective view showing a fifth embodiment of the magnetic recording device according to the present invention. In a shield ring 30 in this embodiment, a flange 35 directed outside in a horizontal direction is formed by drawing at the lower end and a collar 36 directed inside in a horizontal direction is formed at the upper end. A carriage 11 is provided with a wall portion 11A and a gimbal 12 is fixed on the top of the wall portion 11A. The shield ring 30 magnetically shields a magnetic head assembly 20 with the wall portion 11A and the gimbal 12 surrounded.

Fig. 6 is a side view showing a sixth embodiment of the magnetic recording device according to the present invention. This embodiment is applied to a magnetic recording device corresponding to a double sides recorded type of FD. In the magnetic recording device for recording on double sides, a magnetic head on the upper side 10U and a magnetic head on the lower side 10L are opposed in a state in which they.are respectively touched to both sides of the double sides recorded type of FD 40. A reference number 41 denotes a jacket of thickness T housing FD 40. U or L is added to each part composing the upper and lower magnetic heads 10U and 10L after each reference number for distinction.

Upper and lower carriages 11 U and 11L house each flexible printed circuit (FPC) 50U, 50L and wires 25U and 25L respectively from the drive coils for low density recording 23U and 23L and wires 26U and 26L respectively from the coils for high density recording not shown are respectively connected to the flexible printed circuits. The shield rings 30U and 30L are respectively supported by the carriages 11 U and 11L. The magnetic head assemblies 20U and 20L are respectively mounted on the gimbals 12U and 12L. The gimbals 12U and 12L are respectively fixed to the carriages 11U and 11L or are respectively fixed to the shield rings 30U and 30L. The respective backs of the gimbals 12U and 12L are supported by pivots 13U and 13L respectively protruded from the carriages 11 U and 11 L. Since the upper and lower heads corresponding to double sides recorded type FD can be in the unified (common) shape and the initial cost and manhour for management are reduced.

As described above, according to the present invention, as the structure that the shield ring is supported by the carriage is adopted, the weight of the head supported by the gimbal is reduced, as a result, the magnetic recording device wherein the follow-up performance of the magnetic head for the magnetic disk is improved can be realized.

## Claims

1. A magnetic recording head used for a magnetic disk, comprising:
a recording head assembly including:
a slider member having a surface to be slid on a surface of the recording disk;
a head core member secured to the slider member such that one end portion of which forms a recording surface together with the slide surface of the slider; and
a drive coil member provided on the other end portion of the head core member;
a gimbal for supporting the recording head assembly in a center portion thereof;
a carriage for supporting a peripheral portion of the gimbal; and
a shield ring supported by the carriage, the shield ring surrounding the drive coil member for shielding the same magnetically.

2. The magnetic recording head as set forth in claim 1, wherein the head core member includes a first head core used for a low density recording and a second head core used for a high density recording,
wherein the drive coil member includes a first drive coil provided on an end portion of the first head core and a second drive coil provided on an end portion of the second head core, and
wherein the shield ring is provided so as to surround the first drive coil.

3. The magnetic recording head as set forth in claim 1, wherein the carriage includes a flat portion on which the shield ring is fixed and a pair of wall portions vertically extending from the flat portion, and
wherein the gimbal Is supported by an upper end portion of the respective wall portions.

4. The magnetic recording head as set forth in claim 3, wherein the shield ring includes projection pieces extended from an upper end of thereof along the wall portions of the carriage such that an upper end of respective the projection pieces situates upper than the gimbal, and
wherein the respective projection pieces are arranged in the vicinity of the drive coil member.

5. The magnetic recording head as set forth in claim 1, wherein the carriage includes a flat portion on which the shield ring is fixed, and
wherein the gimbal is supported by an upper end portion of the shield ring.

6. The magnetic recording head as set forth in claim 5, wherein the shield rind ring Includes mounting pieces horizontally extended from the upper end portion of the shield ring, on which the gimbal is mounted.

7. The magnetic recording head as set forth in claim 3, wherein the shield ring is fixed on the flat portion so as to cover the wall portions.

8. A magnetic recording device used for a magnetic disk, wherein the recording head as set forth in any one of claims 1 to 7 Is provided on each side of the magnetic disk
